# EUROPÄISCHE PATENTANMELDUNG

(11) **EP 4 119 473 A1**
(43) Veröffentlichungstag der Anmeldung: **18.01.2023**
(21) Anmeldenummer: 22180672.2
(22) Anmeldetag: 23.06.2022
(51) Int. Cl.: B65G 47/86

(54) **BEHÄLTERKLAMMER FÜR UNTERSCHIEDLICHE BEHÄLTERARTEN**

(30) Priorität: 08.07.2021 DE 102021117666
(71) Anmelder: KRONES AG, 93073 Neutraubling (DE)
(72) Erfinder: GLOETZL, Reiner, 93073 Neutraubling (DE); LEIDEL, Marco, 93073 Neutraubling (DE)
(74) Vertreter: v. Bezold & Partner Patentanwälte - PartG mbB

(57) **Zusammenfassung**

Die Erfindung betrifft u.a. eine Klammervorrichtung (10) zum Halten eines Behälters (12) für einen Behälterförderer (64), vorzugsweise für einen Klammerstern. Die Klammervorrichtung (10) weist ein Klammerarmpaar (14) zum Halten des Behälters (12), das relativ zueinander bewegbar ist, auf. Die Klammervorrichtung (10) weist ein Anschlagelement (66) auf, das separat von dem Klammerarmpaar (14) ausgebildet und in einer Anschlagstellung positionierbar ist, in der das Anschlagelement (66) eine Schließbewegung des Klammerarmpaares (14) begrenzt. Vorteilhaft ermöglicht die Klammervorrichtung (10) ein Handhaben von unterschiedlichen Behälterarten, z. B. von Glasflaschen und von PET-Flaschen.

## Beschreibung

### Technisches Gebiet

Die Erfindung betrifft eine Klammervorrichtung zum Halten eines Behälters und einen Behälterförderer zum Transportieren von Behältern. Die Erfindung betrifft ferner ein Rüstteil für einen Behälterförderer und ein Verfahren zum Betreiben eines Behälterförderers.

### Technischer Hintergrund

In Behälterbehandlungsanlagen können Behälter, wie bspw. Flaschen, durch unterschiedliche Anlagenteile transportiert und behandelt werden. Beim Transport können die Behälter bspw. von Behältergreifern bzw. Behälterklammern gehalten werden. Die Klammervorrichtungen können die Behälter bspw. jeweils an einem Behälterhals und/oder Behälterrumpf (Behälterbasis) halten. Ein Behälter kann bspw. durch Aufbringen einer Haltekraft zwischen Klammerarmen einer Klammervorrichtung kraftschlüssig gehalten sein.

In Mischanlagen können mehrere Behälterarten transportiert und ggf. behandelt werden. Bspw. können in einer Mischanlage sowohl Glasflaschen als auch PET-Flaschen verarbeitet werden. Auf Grund von Gewicht und Robustheit müssen die Glasflaschen mit wesentlich größeren Haltekräften verarbeitet werden als PET-Flaschen. PET-Flaschen können hingegen bei zu großen Haltekräften beschädigt werden. Herkömmlich werden für Glasflaschen eigens angepasste Klammersterne zum Transport verwendet werden, die größere Haltekräfte aufbringen. Ebenso werden für PET-Flaschen eigens angepasste Klammersterne zum Transport verwendet, die geringere Haltekräfte aufbringen. Bei Glas-PET-Mischanlagen, die mit Klammersternen produzieren, müssen beim Wechsel zwischen Glasflaschen und PET-Flaschen folglich die Klammersterne getauscht werden, um das beschädigungsfreie Handling zu gewährleisten, was vergleichsweise aufwendig ist.

Die DE 10 2015 106 103 A1 offenbart einen Behältergreifer zum Greifen und Halten eines Behälters und zur Verwendung bei Transportvorrichtungen zum Transportieren von Behältern mit einem Transportelement und mit mehreren an dem Transportelement vorgesehenen Behältergreifern. Der Behältergreifer weist zwei schwenkbare Greiferarme auf, die jeweils durch wenigstens ein bügel- oder blattfederartiges Federelement in eine Schließstellung vorgespannt sind. Der Behältergreifer weist ein Sperrelement auf, welches zwischen wenigstens einer, einen freigebenden Zustand des Behältergreifers entsprechenden freigebenden Position, in der über die Federelemente eine reduzierte erste Schließkraft auf die Greiferarme ausgeübt wird, und wenigstens einer einem sperrenden Zustand des Behältergreifers entsprechenden sperrenden Position bewegbar ist, in der die Federelemente eine gegenüber der ersten Schließkraft erhöhte zweite Schließkraft auf die Greiferarme ausüben.

Die WO 99/51514 A1 betrifft einen Greifer in einem Sternförderer für Behälter mit Mitteln zum Einstellen des Greifers und einer Anpassungsfähigkeit an Behälter unterschiedlichen Durchmessers. Die Mittel zum Einstellen sind so ausgebildet, dass sie mit Mitteln zum Bewegen des Greifers zusammenwirken, so dass die Einstellmittel in Abhängigkeit von ihrer Position eine Vielzahl von Grundkonfigurationen für den Greifer bereitstellen, die jeweils für bestimmte Durchmesser der zu verarbeitenden Behälter geeignet sind. Die Bewegungsmittel führen für jede der Grundkonfigurationen ein Öffnen und Schließen des Greifers durch, um einzelne Behälter zu greifen oder freizugeben.

Der Erfindung liegt die Aufgabe zu Grunde, eine verbesserte Technik zum Halten unterschiedlicher Behälter mit unterschiedlichen Haltekräften für eine Klammervorrichtung zu schaffen.

### Zusammenfassung der Erfindung

Die Aufgabe wird gelöst durch die Merkmale der unabhängigen Ansprüche. Vorteilhafte Weiterbildungen sind in den abhängigen Ansprüchen und der Beschreibung angegeben.

Ein Aspekt betrifft eine (z. B. aktive oder passive) Klammervorrichtung zum Halten eines Behälters für einen Behälterförderer, vorzugsweise für einen Klammerstern. Die Klammervorrichtung weist ein Klammerarmpaar zum Halten des Behälters, das relativ zueinander bewegbar (z. B. schwenkbar und/oder verschiebbar) ist, auf. Die Klammervorrichtung weist ein (z. B. starres) Anschlagelement auf, das separat von dem Klammerarmpaar ausgebildet und in einer Anschlagstellung positionierbar ist, in der das Anschlagelement eine Schließbewegung des Klammerarmpaares begrenzt.

Vorteilhaft ermöglicht die Klammervorrichtung ein Handhaben von unterschiedlichen Behälterarten. Beispielsweise können schwere, starre Behälter, wie Glasflaschen, sicher gehalten werden, indem das Anschlagelement entfernt bzw. außerhalb der Anschlagposition positioniert wird. Andererseits können bspw. leicht verformbare Behälter, die mit einer geringeren Haltekraft zu transportieren sind, wie PET-Flaschen, ebenfalls von der Klammervorrichtung gehalten werden. Dazu kann das Anschlagelement in der Anschlagstellung positioniert werden. Das Anschlagelement begrenzt eine Schließbewegung das Klammerarmpaares. Damit kann das Anschlagelement eine Haltekraft des Klammerarmpaares bzw. der Klammervorrichtung begrenzen. Somit wird nur eine geringe Haltekraft auf den zu haltenden Behälter aufgebracht. Das Anschlagelement kann hierfür speziell auf den zu haltenden Behälter angepasst sein. Vorzugsweise kann so sichergestellt werden, dass das Klammerarmpaar sich beim Halten des Behälters teilweise am Anschlagelement abstützt. Eine die Haltekraft bewirkende Vorspannung des Klammerarmpaares kann damit teilweise auf den zu haltenden Behälter und teilweise auf das Anschlagelement aufgeteilt werden bzw. wirken. Die Auslegung der Haltekraft kann über die Vorspannung am Behälterdurchmesser bestimmt werden. Das Anschlagelement kann ein maximales Schließen des Klammerarmpaares verringern. Vorteilhaft kann zudem eine Behälterumstellung sehr schnell erfolgen, z. B. mit einer Rüstzeit von weniger als einer Minute. Vorteilhaft muss nämlich lediglich das Anschlagelement positioniert bzw. entfernt werden. Ein aufwendiger Komplettaustausch bspw. der Klammervorrichtung oder bspw. des gesamten Klammersterns kann damit entfallen. Somit ist bspw. kein Wechsel der Klammersterne beim Wechsel von Glasflaschen auf PET-Flaschen notwendig. Folglich ist es auch nicht notwendig, in der Anlage zwei oder mehr unterschiedliche Sätze von Klammersternen zu bevorraten.

Die nachfolgenden Ausführungsbeispiele stellen besonders bevorzugte Varianten dar, die die oben erläuterten Vorteile besonders wirkungsvoll ausnutzen können.

In einem Ausführungsbeispiel ist das Anschlagelement aus der Anschlagstellung lösbar, vorzugsweise abnehmbar, sodass vorzugsweise die Schließbewegung unbeeinflusst von dem Anschlagelement ist. Alternativ oder zusätzlich ist das Anschlagelement aus der Anschlagstellung in eine Freigabestellung, in der die Schließbewegung unbeeinflusst von dem Anschlagelement ist, bewegbar (z. B. mittels eines manuellen oder angetriebenen Hubsystems).

In einem weiteren Ausführungsbeispiel ist das Anschlagelement als ein Stab, eine Stange, eine Platte, ein Block, ein Keil oder ein Anschlagbolzen ausgebildet. Alternativ oder zusätzlich ist das Anschlagelement vertikal ausgerichtet. Alternativ oder zusätzlich bewirkt das Anschlagelement in der Anschlagstellung eine Verringerung einer Haltekraft des Klammerarmpaares.

In einem weiteren Ausführungsbeispiel ist das Anschlagelement in der Anschlagstellung zwischen dem Klammerarmpaar, vorzugsweise zwischen einander gegenüberliegenden Anschlagflächen des Klammerarmpaares, positioniert. Alternativ oder zusätzlich weist die Klammervorrichtung eine Betätigungseinrichtung (z. B. mit Eingabeelement, Übertragungselement, Koppelelement und/oder Schwenkarm(en)) zum Bewegen des Klammerarmpaares auf, und das Anschlagelement ist in der Anschlagstellung in Wirkverbindung mit der Betätigungseinrichtung zum Begrenzen der Schließbewegung des Klammerarmpaares.

Beispielsweise kann das Anschlagelement so befestigt sein, dass es sich nicht mit dem Klammerarmpaar beim Öffnen und Schließen des Klammerarmpaares mitbewegt. Alternativ kann sich das Anschlagelement bspw. mit einem der beiden Klammerarme des Klammerarmpaares beim Öffnen und Schließen des Klammerarmpaares mitbewegen.

Vorzugweise kann das Klammerarmpaar zwei gegensinnig zueinander bewegbare (z. B. verschiebbare und/oder schwenkbare) Klammerarme zum Halten des Behälters aufweisen.

In einem weiteren Ausführungsbeispiel weist die Klammervorrichtung ferner ein weiteres Klammerarmpaar zum Halten des Behälters gemeinsam mit dem Klammerarmpaar auf, wobei das weitere Klammerarmpaar relativ zueinander bewegbar (z. B. schwenkbar und/oder verschiebbar) und über oder unter dem Klammerarmpaar angeordnet ist.

In einem weiteren Ausführungsbeispiel begrenzt das Anschlagelement in der Anschlagstellung ebenfalls eine Schließbewegung des weiteren Klammerarmpaares (z. B. direkt oder mittelbar).

Beispielsweise ist das Anschlagelement in der Anschlagstellung zwischen dem weiteren Klammerarmpaar, vorzugsweise zwischen einander gegenüberliegenden Anschlagflächen des weiteren Klammerarmpaares, positioniert. Alternativ oder zusätzlich weist die weitere Klammervorrichtung eine weitere Betätigungseinrichtung (z. B. mit Eingabeelement, Übertragungselement, Koppelelement und/oder Schwenkarm(en)) zum Bewegen des weiteren Klammerarmpaares auf, und das Anschlagelement ist in der Anschlagstellung in Wirkverbindung mit der weiteren Betätigungseinrichtung zum Begrenzen der Schließbewegung des weiteren Klammerarmpaares. Alternativ oder zusätzlich ist die Betätigungseinrichtung zum Bewegen des Klammerarmpaares ebenfalls zum Bewegen des weiteren Klammerarmpaares ausgebildet, und das Anschlagelement ist in der Anschlagstellung in Wirkverbindung mit der Betätigungseinrichtung zum Begrenzen der Schließbewegung des Klammerarmpaares und des weiteren Klammerarmpaares.

In einem weiteren Ausführungsbeispiel weist die Klammervorrichtung ein weiteres Anschlagelement auf, das in einer Anschlagstellung positionierbar ist, in der das weitere Anschlagelement eine Schließbewegung des weiteren Klammerarmpaares begrenzt.

In einem weiteren Ausführungsbeispiel ist das weitere Klammerarmpaar ohne ein separates, eine Schließbewegung des weiteren Klammerarmpaares begrenzendes Anschlagelement ausgebildet bzw. angeordnet.

Bevorzugt kann das Klammerarmpaar und/oder das weitere Klammerarmpaar zum Schließen vorgespannt sein, besonders bevorzugt unabhängig von dem Anschlagelement.

Beispielsweise kann eine Vorspannung mittels eines elastischen Elements bewirkt werden, z. B. mittels einer Feder (wie Zugfeder oder Druckfeder), besonders bevorzugt einer Schraubenfeder.

Vorzugweise kann das weitere Klammerarmpaar zwei gegensinnig zueinander bewegbare (z. B. verschiebbare und/oder schwenkbare) weitere Klammerarme zum Halten des Behälters aufweisen.

Ein weiterer Aspekt betrifft einen Behälterförderer, vorzugsweise einen Klammerstern, zum Transportieren von Behältern. Der Behälterförderer weist mehrere Klammervorrichtungen wie hierin offenbart auf, die vorzugsweise um einen Umfang des Behälterförderers angeordnet sind. Der Behälterförderer kann die gleichen Vorteile erzielen, die hierin bereits für die Klammervorrichtung beschrieben sind.

In einer Ausführungsform weist der Behälterförderer ferner einen, vorzugsweise ringförmigen oder ringsegmentförmigen, Trägerkörper auf, der die Anschlagelemente der mehreren Klammervorrichtungen gemeinsam trägt, vorzugsweise auf einer Oberseite oder einer Unterseite des Trägerkörpers. Vorzugsweise kann der Trägerkörper auf einem Gestell (z. B. Maschinenrahmen) des Behälterförderers lösbar befestigt sein, besonders bevorzugt mittels eines werkzeuglosen (z. B. schwenkbaren) Schnellwechselsystems. Vorteilhaft kann der Trägerkörper ein sehr schnelles Umrüsten des Behälterförderers ermöglichen, da alle Anschlagelemente mit einem Mal montiert oder demontiert werden können.

Bevorzugt kann der Trägerkörper als ein Aufsatz auf dem Gestell montiert werden.

Beispielsweise kann der Trägerkörper oberhalb, vorzugsweise direkt oberhalb, von den Klammervorrichtungen angeordnet sein.

In einer weiteren Ausführungsform ist der Behälterförderer wahlweise in einer ersten Konfiguration und in einer zweiten Konfiguration zum Transportieren der Behälter betreibbar, wobei die Anschlagelemente in der ersten Konfiguration in der Anschlagstellung positioniert sind und in der zweiten Konfiguration außerhalb der Anschlagstellung positioniert und/oder vom Behälterförderer demontiert sind.

Ein weiterer Aspekt betrifft ein Rüstteil für einen vorzugsweise als Klammerstern ausgeführten Behälterförderer, vorzugsweise wie hierin offenbart. Das Rüstteil weist einen ringförmigen oder ringsegmentförmigen Trägerkörper auf. Das Rüstteil weist mehrere (z. B. stabförmige, bolzenförmige, keilförmige, stangenförmige, plattenförmige oder blockförmige) Anschlagelemente für Klammervorrichtungen (z. B. für Klammerarmpaare der Klammervorrichtungen) des Klammersterns zum Begrenzen einer Schließbewegung der Klammervorrichtungen (z. B. der Klammerarmpaare der Klammervorrichtungen) auf, wobei die mehreren Anschlagelemente (z. B. in gleichen Abständen) verteilt um einen Umfang des Trägerkörpers angeordnet sind (z. B. an einer Unterseite oder einer Oberseite des Trägerkörpers). Vorteilhaft kann das Rüstteil ein sehr schnelles Umrüsten des Behälterförderers ermöglichen, da alle Anschlagelemente mit einem Mal montiert oder demontiert werden können.

Bevorzugt ist der Trägerkörper dazu ausgebildet, an einem Gestell, vorzugsweise Maschinenrahmen, des Behälterförderers montierbar zu sein, z. B. werkzeuglos und/oder mittels eines Schwellwechselsystems.

Ein weiterer Aspekt betrifft ein Verfahren zum Betreiben eines Behälterförderers, vorzugsweise Klammersterns und/oder wie hierin offenbart, mit mehreren Klammervorrichtungen (z. B. verteilt um einen Umfang des Behälterförderers angeordnet). Das Verfahren weist ein Bereitstellen mehrerer (z. B. stabförmiger, bolzenförmiger, keilförmiger, stangenförmiger, plattenförmiger oder blockförmiger) Anschlagelemente, z. B. wie hierin offenbart, auf. Das Verfahren weist ein wahlweises Betreiben des Behälterförderers in einer ersten Konfiguration und in einer zweiten Konfiguration auf. In der ersten Konfiguration sind die bereitgestellten mehreren Anschlagelemente in einer Anschlagstellung positioniert, in der sie eine Schließbewegung einer jeweils zugeordneten Klammervorrichtung der mehreren Klammervorrichtungen begrenzen. In der zweiten Konfiguration sind die bereitgestellten mehreren Anschlagelemente außerhalb von der Anschlagstellung positioniert und/oder von dem Behälterförderer demontiert. Vorteilhaft kann das Verfahren die gleichen Vorteile erzielen, die hierin bereits für die Klammervorrichtung beschrieben sind.

In einer Ausführungsvariante transportiert der Behälterförderer in der ersten Konfiguration eine erste Behälterart, vorzugsweise Kunststoffbehälter, besonders bevorzugt PET-Flaschen. Alternativ oder zusätzlich transportiert der Behälterförderer in der zweiten Konfiguration eine zweite Behälterart, die sich von der ersten Behälterart unterscheidet (z. B. starrer, fester, stabiler und/oder schwerer als die erste Behälterart ist), vorzugweise Glasbehälter, besonders bevorzugt Glasflaschen.

In einer weiteren Ausführungsvariante ist in der ersten Konfiguration eine Haltekraft der mehreren Klammervorrichtungen, mit der die erste Behälterart gehalten wird, mittels der mehreren Anschlagelemente verringert im Vergleich zu einer Haltekraft der mehreren Klammervorrichtungen, mit der die zweite Behälterart in der zweiten Konfiguration gehalten wird.

In einer weiteren Ausführungsvariante weist das Verfahren ferner ein Umrüsten des Behälterförderers von der ersten Konfiguration zu der zweiten Konfiguration mittels, vorzugsweise gleichzeitigen und/oder werkzeuglosen, Demontierens der mehrerer Anschlagelemente von dem Behälterförderer und/oder Entfernens der mehreren Anschlagelemente aus der jeweiligen Anschlagstellung auf. Alternativ oder zusätzlich weist das Verfahren ferner ein Umrüsten des Behälterförderers von der zweiten Konfiguration zu der ersten Konfiguration mittels, vorzugsweise gleichzeitigen und/oder werkzeuglosen, Montierens der mehrerer Anschlagelemente an dem Behälterförderer und/oder Positionierens der mehreren Anschlagelemente in der jeweiligen Anschlagstellung auf.

In einer weiteren Ausführungsvariante sind die mehreren Anschlagelemente derart bereitgestellt, dass sie an einem gemeinsamen, vorzugsweise ringförmigen, Trägerkörper zum gleichzeitigen, vorzugsweise werkzeuglosen, Montieren an dem Behälterförderer und/oder zum gleichzeitigen, vorzugsweise werkzeuglosen, Demontieren von dem Behälterförderer getragen sind.

Ein weiterer Aspekt betrifft eine Behälterbehandlungsanlage (z. B. zum Herstellen, Reinigen, Prüfen, Abfüllen, Verschließen, Etikettieren, Bedrucken und/oder Verpacken von Behältern für flüssige Medien, vorzugsweise Getränke oder flüssige Nahrungsmittel). Die Behälterbehandlungsanlage weist die Klammervorrichtung wie hierin offenbart, den Behälterförderer wie hierin offenbart und/oder das Rüstteil wie hierin offenbart auf.

Beispielsweise können die Behälter als Flaschen, Dosen, Kanister, Kartons, Flakons usw. ausgeführt sein.

Die zuvor beschriebenen bevorzugten Ausführungsformen und Merkmale der Erfindung sind beliebig miteinander kombinierbar.

### Kurzbeschreibung der Figuren

Weitere Einzelheiten und Vorteile der Erfindung werden im Folgenden unter Bezug auf die beigefügten Zeichnungen beschrieben. Es zeigen:
- Figur 1: eine perspektivische Ansicht einer Klammervorrichtung mit einem daran gehaltenen Behälter (zweite Konfiguration);
- Figur 2: eine Schnittansicht durch die beispielhafte Klammervorrichtung (zweite Konfiguration);
- Figur 3: eine perspektivische Ansicht eines Behälterförderers ohne montierte Anschlagelemente (zweite Konfiguration);
- Figur 4: eine perspektivische Ansicht des beispielhaften Behälterförderers mit montierten Anschlagelementen (erste Konfiguration);
- Figur 5: eine Draufsicht auf den beispielhaften Behälterförderer von Figur 4 (erste Konfiguration);
- Figur 6: einen Ausschnitt einer Seitenansicht des beispielhaften Behälterförderers von Figur 4 (erste Konfiguration);
- Figur 7: einen vergrößerter Ausschnitt aus Figur 4 (erste Konfiguration);
- Figur 8: einen vergrößerter Ausschnitt aus Figur 4 (erste Konfiguration);
- Figur 9: einen Ausschnitt einer perspektivischen Ansicht eines beispielhaften Behälterförderers mit montierten Anschlagelementen (erste Konfiguration);
- Figur 10: einen Ausschnitt einer Seitenansicht des beispielhaften Behälterförderers von Figur 9 (erste Konfiguration); und
- Figur 11: einen Ausschnitt einer Schnittansicht des beispielhaften Behälterförderers von Figur 9 (erste Konfiguration).

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

### Detaillierte Beschreibung beispielhafter Ausführungsformen

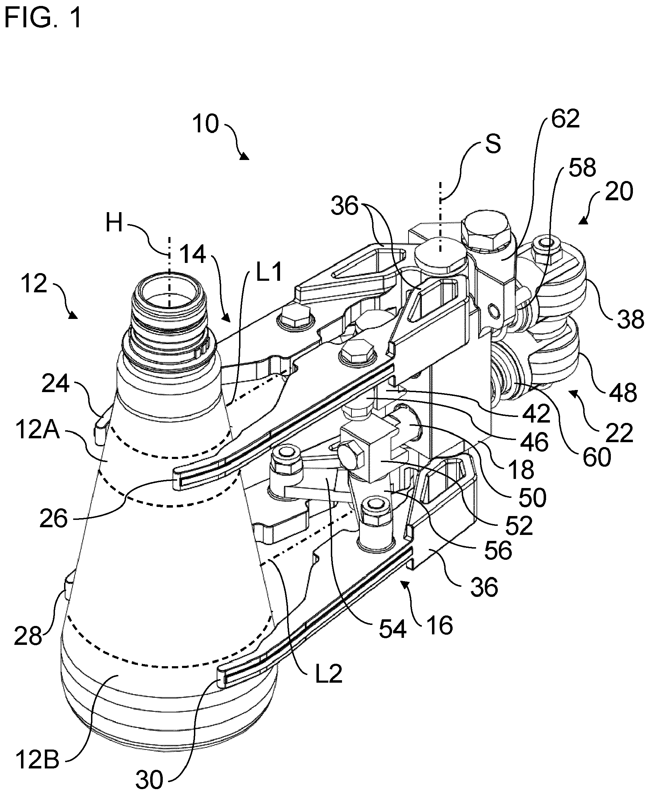

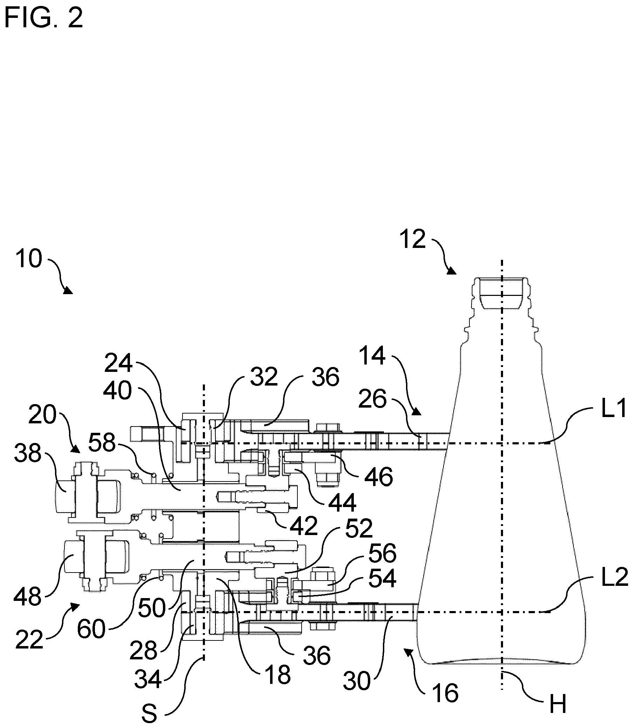

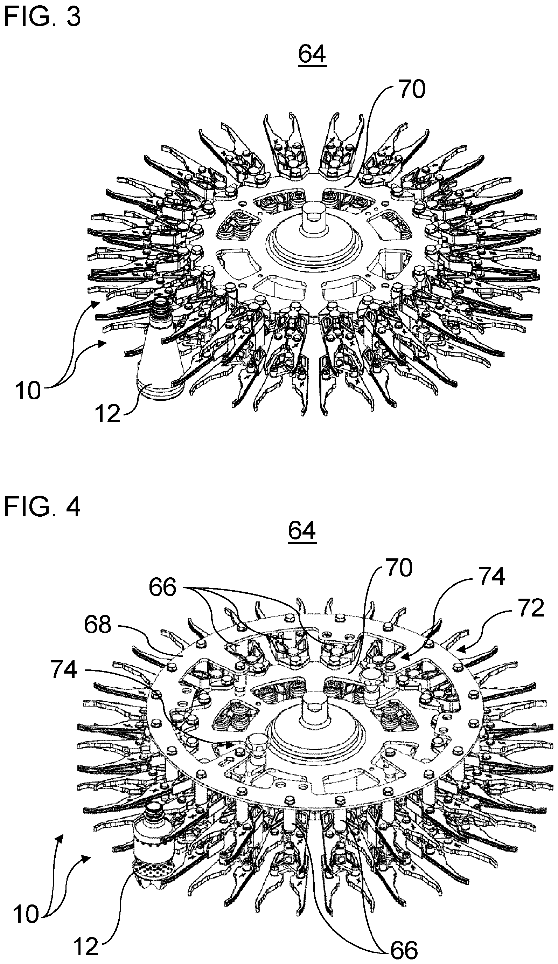

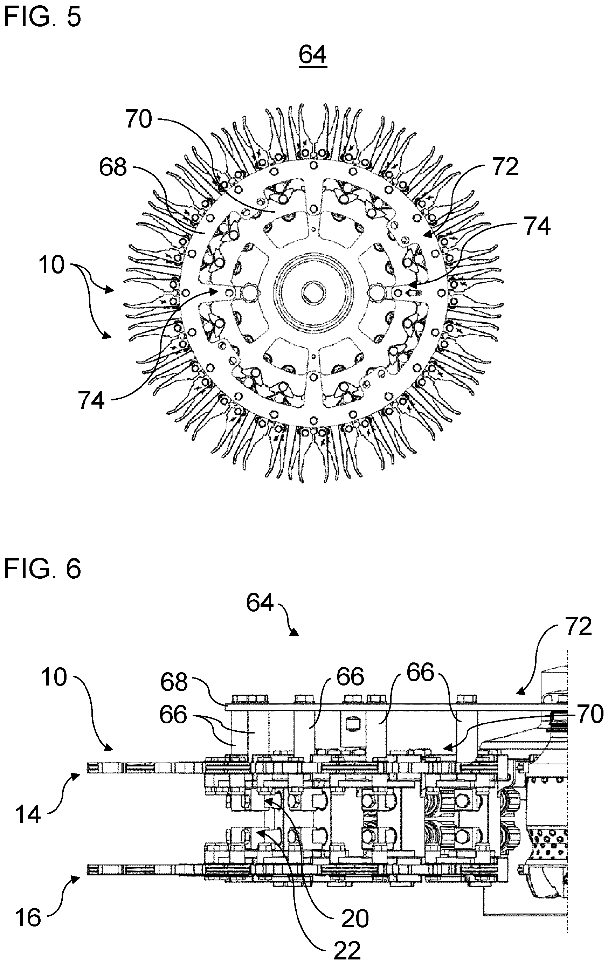

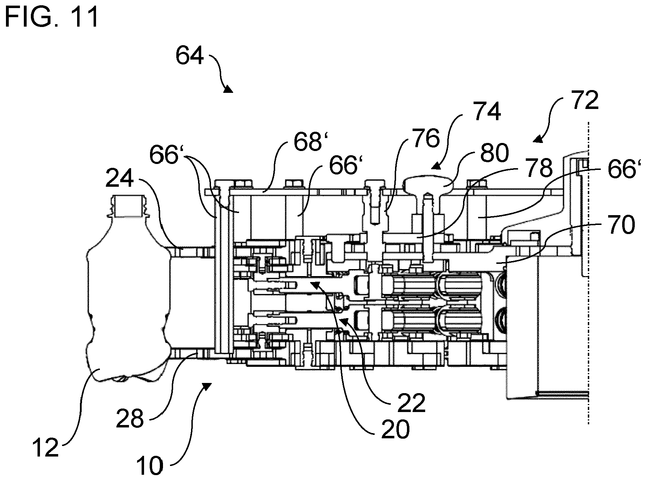

Nachfolgend ist zunächst unter Bezugnahme auf die Figuren 1 und 2 eine bevorzugte Ausführung einer Klammervorrichtung beschrieben, deren Integration in einem Behälterförderer wiederum in Figur 3 dargestellt. Darauf aufbauend werden unter Bezugnahme auf die Figuren 4 bis 11 Techniken beschrieben, die auf die beispielhaft beschriebene Klammervorrichtung zum Verringern einer Haltekraft zum Halten eines Behälters anwendbar sind.

Die Figuren 1 und 2 zeigen eine Klammervorrichtung 10 in unterschiedlichen Ansichten. Die Klammervorrichtung 10 hält einen Behälter 12. Es ist möglich, aber nicht zwingend, dass der Behälter 12 einen Behälterkörper mit unterschiedlichen Außenumfängen entlang seiner Länge bzw. Höhe aufweist. In einigen Ausführungsformen kann der Behälter 12 als ein sogenannter Konturbehälter ausgeführt sein, der dennoch sicher von der Klammervorrichtung 10 gehalten sein kann, wie nachfolgend beispielhaft beschrieben ist.

Die Klammervorrichtung 10 weist ein Klammerarmpaar 14 auf. Optional kann die Klammervorrichtung 10 ein weiteres Klammerarmpaar 16 aufweisen. Die Klammervorrichtung 10 kann optional ferner einen Klammerträger 18, eine Betätigungseinrichtung 20 und/oder eine weitere Betätigungseinrichtung 22 aufweisen.

Vorzugsweise ist die Klammervorrichtung 10 als eine Doppel-Klammervorrichtung mit den beiden Klammerarmpaaren 14, 16 ausgeführt. Es ist allerdings bspw. auch möglich, dass die Klammervorrichtung 10 nur das Klammerarmpaar 14 oder mehr als die zwei Klammerarmpaare 14, 16 (nicht dargestellt) aufweist. Sofern die Klammervorrichtung 10 mehrere Klammerarmpaare 14, 16 aufweist, können diese entweder unabhängig voneinander oder gekoppelt betätigbar sein. Nachfolgend ist eine Konfiguration mit unabhängiger Betätigung beschrieben, die bspw. vorteilhaft sein kann, wenn sogenannte Konturbehälter zu greifen sind, wie in Figur 1 und 2 dargestellt ist.

Das Klammerarmpaar 14 kann zwei Klammerarme 24, 26 aufweisen. Das weitere Klammerarmpaar 16 kann zwei (zweite bzw. weitere) Klammerarme 28, 30 aufweisen. Die Klammerarme 24 und 26 (bzw. 28 und 30) können separat ausgebildet sein, wie in den Figuren 1 und 2 dargestellt ist. Es ist möglich, dass die Klammerarme 24 und 26 (bzw. 28 und 30) integral-einstückig miteinander ausgebildet sind.

Vorzugsweise kann das weitere Klammerarmpaar 16 im Wesentlichen baugleich und/oder funktionsgleich zu dem Klammerarmpaar 14 ausgeführt sein. Bevorzugt sind das Klammerarmpaar 14 und das weitere Klammerarmpaar 16 im Wesentlichen spiegelsymmetrisch bezüglich einer Mittellängsebene der Klammervorrichtung 10 bzw. bezüglich einer Horizontalebene (im montierten Zustand) ausgebildet. Die Mittellängsebene teilt die Klammervorrichtung 10 auf halber Höhe und verläuft parallel zu Längsachsen L1, L2 der Klammerarmpaare 14, 16.

Die Klammerarme 24, 26 des Klammerarmpaares 14 können in einer gemeinsamen (Horizontal-) Ebene liegen, wie in den Figuren 1 und 2 dargestellt ist, oder vertikal versetzt zueinander angeordnet sein. Die Klammerarme 28, 30 des weiteren Klammerarmpaares 16 können in einer gemeinsamen (Horizontal-) Ebene liegen, wie in den Figuren 1 und 2 dargestellt ist, oder vertikal versetzt zueinander angeordnet sein.

Das Klammerarmpaar 14 kann relativ zueinander bewegbar sein, z. B. verschwenkbar und/oder verschiebbar. Das optionale weitere Klammerarmpaar 16 kann ebenfalls relativ zueinander bewegbar sein. Bevorzugt ist das Klammerarmpaar 14 und/oder 16 schwenkbar gelagert, wie dargestellt ist. Die schwenkbare Lagerung ist bevorzugt an einem Ende des Klammerarmpaares 14 und/oder 16 entgegengesetzt zu dem Behälter 12 bzw. den freien Enden der Klammerarmpaare 14, 16 angeordnet. Die Klammerarmpaare 14, 16 können bevorzugt koaxial zueinander verschwenkbar sein bzw. um eine gemeinsame Schwenkachse S schwenkbar sein.

Im Einzelnen können die Klammerarme 24, 26 des Klammerarmpaares 14 bevorzugt gegensinnig zueinander schwenkbar sein. Die Klammerarme 28, 30 des weiteren Klammerarmpaares 16 können gegensinnig zueinander schwenkbar sein. Zum Halten des Behälters 12 können die Klammerarme 24, 26 des Klammerarmpaares 14 bis zum Anlegen an den Behälter 12 zueinander geschwenkt werden, und optional können die Klammerarme 28, 30 des weiteren Klammerarmpaares 16 bis zum Anlegen an den Behälter 12 zueinander geschwenkt werden. Zum Freigeben des Behälters 12 können die Klammerarme 24, 26 des Klammerarmpaares 14 voneinander weggeschwenkt werden, und die Klammerarme 28, 30 des weiteren Klammerarmpaares 16 können voneinander weggeschwenkt werden.

Sofern beide Klammerarmpaare 14, 16 vorhanden sind, können diese zum gleichzeitigen Halten desselben Behälters 12 übereinander angeordnet sein. Die Klammerarmpaare 14, 16 sind bspw. bezüglich einer Hochachse H des Behälters 12 vertikal versetzt zueinander angeordnet. Beispielsweise ist das weitere Klammerarmpaar 16 (die zwei Klammerarme 28, 30) unterhalb von dem Klammerarmpaar 14 (den zwei Klammerarmen 24, 26) angeordnet, wie in den Figuren 1 und 2 dargestellt ist, oder umgekehrt.

Das Klammerarmpaar 14 kann den Behälter 12 an einem ersten Außenumfangsabschnitt bzw. Mantelabschnitt 12A halten. Das weitere Klammerarmpaar 16 kann den Behälter 12 an einem zweiten Außenumfangsabschnitt bzw. Mantelabschnitt 12B halten. Die Außenumfangsabschnitte 12A, 12B sind bevorzugt jeweils umlaufend bzw. in sich geschlossen. Die Außenumfangsabschnitte 12A und 12B sind bezüglich der Hochachse H des Behälters 12 versetzt zueinander angeordnet. Beispielsweise ist der erste Außenumfangsabschnitt 12A oberhalb von dem zweiten Außenumfangsabschnitt 12B angeordnet, wie in den Figuren 1 und 2 dargestellt ist, oder umgekehrt.

In Konfigurationen, in denen (auch) Konturbehälter durch die Klammervorrichtung 10 gehalten werden sollen, können sich die Außenumfangsabschnitte 12A und 12B in einer Form und/oder einer Größe bzw. Länge voneinander unterscheiden. Im dargestellten Ausführungsbeispiel von Figur 1 und 2 ist beispielsweise die Form der Außenumfangsabschnitte 12A und 12B jeweils gleich, nämlich kreisrund bezüglich eines Querschnitts oder kegelstumpfförmig bezüglich der Hochachse H. Die dargestellten Außenumfangsabschnitte 12A und 12B unterscheiden sich in der Größe. Der dargestellte erste Außenumfangsabschnitt 12A weist einen kleineren Umfang und einen kleineren Durchmesser als der dargestellte zweite Außenumfangsabschnitt 12B auf.

Der Behälter 12 kann jeweils an den vorderen bzw. dem Behälter 12 zugewandten Abschnitten des Klammerarmpaares 14 und/oder 16 gehalten sein. Im Einzelnen kann der Behälter 12 zwischen den freien Enden der Klammerarme 24, 26 des Klammerarmpaares 14 und optional zwischen den freien Enden der Klammerarme 28, 30 des optionalen weiteren Klammerarmpaares 16 gehalten sein. Die Klammerarme 24, 26 und/oder die Klammerarme 28, 30 können den Behälter 12 an ihren freien Enden umgreifen. Die Klammerarme 24, 26 und/oder Klammerarme 28, 30 können den Behälter 12 zwischen ihren freien Enden unter Aufbringung einer Haltekraft einklemmen. Die Haltekraft kann bspw. durch eine auf das Klammerarmpaar 14 wirkende Vorspannung und/oder eine auf das weitere Klammerarmpaar 16 wirkende Vorspannung bewirkt sein.

Wie erwähnt, ist es möglich, dass die Klammerarmpaare 14, 16 unabhängig bzw. entkoppelt voneinander bewegbar, vorzugsweise schwenkbar, sind. Das Klammerarmpaar 14 kann relativ zueinander bewegt, vorzugsweise verschwenkt, werden, ohne dass das weitere Klammerarmpaar 16 sich relativ zueinander bewegt, vorzugsweise mitschwenkt, und umgekehrt. Es ist allerdings auch möglich, dass die Bewegung der Klammerarmpaare 14, 16 miteinander gekoppelt ist.

In der entkoppelten Konfiguration beeinflusst bspw. eine Anlagebewegung des Klammerarmpaares 14 an den ersten Außenumfangsabschnitt 12A eine Anlagebewegung des optionalen weiteren Klammerarmpaares 16 an den zweiten Außenumfangsabschnitt 12B nicht, und umgekehrt. Die Anlagebewegung des weiteren Klammerarmpaares 16 kann bspw. andauern, während das Klammerarmpaar 14 bereits an dem ersten Außenumfangsabschnitt 12A anliegt, und umgekehrt (z. B. abhängig von einer Form und/oder Größe der Außenumfangsabschnitte 12A, 12B). Bspw. können die Klammerarmpaare 14, 16, vorzugsweise unter Wirkung einer Vorspannung der Klammerarmpaare 14 und 16, die Anlagebewegungen gleichzeitig beginnen (z. B. bei Beenden einer Betätigung der Klammerarmpaare 14, 16) und/oder nacheinander beenden (z. B. jeweils zum Zeitpunkt der Anlage an den Behälter 12). Bei der Anlagebewegung können sich die Klammerarme 24, 26 aufeinander zu bewegen, vorzugsweise schwenken. Bei der Anlagebewegung können sich die Klammerarme 28, 30 aufeinander zu bewegen, vorzugsweise schwenken.

In der entkoppelten Konfiguration beeinflusst bspw. eine Freigabebewegung des Klammerarmpaares 14 weg von dem ersten Außenumfangsabschnitt 12A eine Freigabebewegung des weiteren Klammerarmpaares 16 weg von dem zweiten Außenumfangsabschnitt 12B nicht, und umgekehrt. Die Freigabebewegung des Klammerarmpaares 14 kann bspw. beginnen, bevor die Freigabebewegung des weiteren Klammerarmpaares 16 beginnt, und umgekehrt (z. B. abhängig von einer Form und/oder Größe der Außenumfangsabschnitte 12A, 12B). Bspw. können die Klammerarmpaare 14, 16, vorzugsweise unter Wirkung einer Betätigung der Klammerarmpaare 14 und 16, die Freigabebewegung gleichzeitig beenden. Bei der Freigabebewegung des Klammerarmpaares 14 können sich die Klammerarme 24, 26 voneinander wegbewegen, vorzugsweise voneinander wegschwenken. Bei der Freigabebewegung des weiteren Klammerarmpaares 16 können sich die Klammerarme 28, 30 voneinander wegbewegen, vorzugsweise voneinander wegschwenken.

Das Klammerarmpaar 14 und/oder 16 kann sich entlang einer Längsachse L1 bzw. L2 erstrecken. Die Längsachsen L1, L2 können im Wesentlichen parallel zueinander verlaufen. Die Längsachse L1 und/oder L2 kann im Wesentlichen senkrecht zu der Hochachse H verlaufen. Die Längsachse L1 und/oder L2 kann im Wesentlichen senkrecht zu der Schwenkachse S verlaufen. Im montierten Zustand kann die Längsachse L1 und/oder L2 im Wesentlichen parallel zu einer Horizontalebene verlaufen.

Das Klammerarmpaar 14 und/oder 16 kann an dem Klammerträger 18 bewegbar, vorzugsweise schwenkbar, gelagert sein. Beispielsweise können die Klammerarmpaare 14, 16 auf entgegengesetzten Seiten des Klammerträgers 18 an dem Klammerträger 18 bewegbar gelagert sein. Der Klammerträger 18 kann zwischen den Klammerarmpaaren 14, 16 angeordnet sein, vorzugsweise bezüglich einer Hochachse der Klammervorrichtung 10. Der Klammerträger 18 kann das Klammerarmpaar 14 und/oder 16 tragen. Der Klammerträger 18 ist vorzugsweise blockförmig ausgeführt. Der Klammerträger 18 erstreckt sich vorzugsweise länglich entlang der Schwenkachse S und/oder parallel zur Hochachse H.

Beispielsweise kann das Klammerarmpaar 14 und/oder 16 an einem, vorzugsweise länglichen, Drehzapfen 32 bzw. 34 des Klammerträgers 18 schwenkbar gelagert sein. Im Einzelnen können die Klammerarme 24, 26 und/oder 28, 30 jeweils ein Durchgangsloch aufweisen, z. B. an einem den jeweils freien Enden entgegengesetzten Ende des jeweiligen Klammerarms 24, 26, 28, 30. Der Drehzapfen 32 und/oder 34 kann sich durch die Durchgangslöcher erstrecken. Es ist möglich, dass eine Gleitbuchse zwischen dem Drehzapfen 32 bzw. 34 und den Durchgangslöchern angeordnet ist.

Der Drehzapfen 32 und/oder 34 kann sich koaxial zu der Schwenkachse S erstrecken. Der Drehzapfen 32 und/oder 34 kann sich parallel zu der Hochachse H erstrecken. Die Drehzapfen 32, 34 können auf entgegengesetzten Seiten des Klammerträgers 18 angeordnet sein. Beispielsweise kann der Drehzapfen 32 an einer Oberseite des Klammerträgers 18 angeordnet sein. Der Drehzapfen 34 kann an einer Unterseite des Klammerträgers 18 angeordnet sein.

Die Klammerarme 24, 26 können übereinander auf den Drehzapfen 32 aufgesteckt sein. Die Klammerarme 28, 30 können übereinander auf den Drehzapfen 34 aufgesteckt sein. Die Klammerarme 24, 26 können axial auf dem Drehzapfen 32 gesichert sein. Die Klammerarme 28, 30 können axial auf dem Drehzapfen 34 gesichert sein. Die axiale Sicherung kann bspw. mittels eines Schraubenkopfes einer Schraube erfolgen, die in ein (z. B. Zentral-) Loch im Drehzapfen 32 bzw. 34 eingeschraubt ist, vorzugsweise koaxial zur Schwenkachse S.

Angrenzend an die Lagerstelle zum Klammerträger 18 kann das Klammerarmpaar 14 und/oder 16 verstärkt sein. Im Einzelnen kann eine Materialstärke der Klammerarme 24, 26, 28 und/oder 30 angrenzend an die Lagerstelle vergrößert sein. Die Klammerarme 24, 26, 28, 30 können bspw. Verstärkungsrippen 36 angrenzend an die schwenkbare Lagerung aufweisen. Die Verstärkungsrippen 36 können bspw. als Wandelemente auf einer Oberseite und/oder einer Unterseite der Klammerarme 24, 26, 28, 30 ausgeführt sein. Die Wandelemente können ringförmige bzw. umlaufende Strukturen sein. Die Verstärkungsrippen 36 können in einem Abschnitt der Klammerarme 24, 26, 28, 30 angeordnet sein, der den freien Enden der Klammerarme 24, 26, 28, 30 entgegengesetzt ist. Die Verstärkungsrippen 36 können sich in Richtung zu den freien Enden der Klammerarme 24, 26, 28, 30 verjüngen.

Nachfolgend ist eine bevorzugte Konfiguration zum Betätigen der Klammervorrichtung 10 erläutert. Hierbei ist die Klammervorrichtung 10 als eine aktive Klammervorrichtung ausgeführt, die aktiv von mindestens einer Betätigungseinrichtung betätigt bzw. bewegt wird. Alternativ ist es möglich, dass die Klammervorrichtung 10 bspw. als eine passive Klammervorrichtung ausgeführt ist, deren Klammerarmpaar 14 und optional 16 (lediglich) elastisch (z. B. federnd) in die Schließstellung vorgespannt ist.

Das Klammerarmpaar 14 kann von der Betätigungseinrichtung 20 bewegt werden, vorzugsweise um den Drehzapfen 32 bzw. die Schwenkachse S geschwenkt werden. Das optionale weitere Klammerarmpaar 16 kann von der weiteren Betätigungseinrichtung 22 bewegt werden, vorzugsweise um den Drehzapfen 34 bzw. die Schwenkachse S geschwenkt werden. Die Betätigungseinrichtung 20 und/oder 22 kann bevorzugt als eine Rollenansteuerung ausgeführt sein. Bevorzugt kann die Betätigungseinrichtung 20 und/oder 22 das Klammerarmpaare 14 bzw. 16 zum Freigeben des Behälters 12 zum Öffnen bewegen, vorzugsweise verschwenken.

Die Betätigungseinrichtungen 20, 22 können, wie in den Figuren 1 und 2 dargestellt ist, voneinander entkoppelt sein bzw. unabhängig voneinander funktionieren. Es ist allerdings auch möglich, dass die Betätigungseinrichtungen 20, 22 miteinander gekoppelt sind oder dass bspw. nur eine Betätigungseinrichtung für beide Klammerarmpaare 14, 16 vorhanden ist.

Im dargestellten Ausführungsbeispiel der Figuren 1 und 2 sind die Betätigungseinrichtungen 20, 22 bevorzugt baugleich und/oder funktionsgleich ausgebildet. Bevorzugt sind die Betätigungseinrichtung 20 und die weitere Betätigungseinrichtung 22 im Wesentlichen spiegelsymmetrisch bezüglich der Mittellängsebene der Klammervorrichtung 10 bzw. bezüglich einer Horizontalebene (im montierten Zustand) ausgebildet. Die Betätigungseinrichtungen 20, 22 können übereinander angeordnet sein. Die Betätigungseinrichtungen 20, 22 können zwischen dem Klammerarmpaar 14 und dem weiteren Klammerarmpaar 16 angeordnet sein, vorzugsweise bezüglich einer Hochachse der Klammervorrichtung 10.

Die Betätigungseinrichtung 20 kann teilweise auf einer Unterseite des Klammerarmpaares 14 angeordnet sein. Die weitere Betätigungseinrichtung 22 kann teilweise auf einer Oberseite des weiteren Klammerarmpaares 16 angeordnet sein. Die Betätigungseinrichtung 20 und/oder 22 kann sich im Wesentlichen parallel zu der Längsachse L1 bzw. L2 des Klammerarmpaares 14 bzw. 16 erstrecken.

Die Betätigungseinrichtung 20 und/oder 22 kann von dem Klammerträger 18 getragen sein. Die Betätigungseinrichtung 20 und/oder 22 kann sich durch den Klammerträger 18 hindurch erstrecken, vorzugsweise von einer Rückseite bzw. einer dem Behälter 12 abgewandten Seite des Klammerträgers 18 zu einer Vorderseite bzw. einer dem Behälter 12 zugewandten Seite des Klammerträgers 18.

In der in den Figuren 1 und 2 dargestellten Konfiguration sind die Betätigungseinrichtungen 20, 22 entkoppelt voneinander, sodass sie sich unabhängig voneinander bewegen können. Die erste Betätigungseinrichtung 20 kann sich bewegen, ohne dass sich die zweite Betätigungseinrichtung 22 bewegt, und umgekehrt. Wie erwähnt, sind jedoch bspw. auch gekoppelte Konfigurationen und passive Konfigurationen möglich.

Die Betätigungseinrichtung 20 kann in einem Abschnitt zwischen den freien Enden und der (z. B. Schwenk-) Lagerung der Klammerarme 24, 26 mit den Klammerarmen 24, 26 verbunden sein, vorzugsweise in Mittelabschnitten der Klammerarme 24, 26 bezüglich der Längsachse L1. Die weitere Betätigungseinrichtung 22 kann in einem Abschnitt zwischen den freien Enden und der (z. B. Schwenk-) Lagerung der Klammerarme 28, 30 mit den weiteren Klammerarmen 28, 30 verbunden sein, vorzugsweise in Mittelabschnitten der Klammerarme 28, 30 bezüglich der Längsachse L2.

Die Betätigungseinrichtung 20 kann vorzugsweise ein Eingabeelement 38, ein Übertragungselement 40, ein Koppelelement 42 und zwei Schwenkarme 44, 46 aufweisen. Es ist möglich, dass die Komponenten 38, 40, 42, 44, 46 zumindest teilweise ineinander integriert sind. Die weitere Betätigungseinrichtung 22 kann mit einem Eingabeelement 48, einem Übertragungselement 50, einem Koppelelement 52 und zwei Schwenkarmen 54, 56 wie die Betätigungseinrichtung 20 aufgebaut sein und funktionieren. Die nachfolgenden Detailausführungen zu der Betätigungseinrichtung 20 können somit, mutatis mutandis, entsprechend für die weitere Betätigungseinrichtung 22 gelten. Es ist allerdings bspw. auch möglich, dass sich die Betätigungseinrichtungen 20, 22 ein Eingabeelement und/oder ein Übertragungselement teilen.

Das Eingabeelement 38 kann an dem Übertragungselement 40 getragen sein, vorzugsweise endseitig. Das Eingabeelement 38 kann auf einer dem Behälter 12 abgewandten Seite des Klammerträgers 18 bzw. auf einer Rückseite der Klammervorrichtung 10 bzw. des Klammerträgers 18 angeordnet sein. Das Eingabeelement 38 kann eine mechanische Eingabe empfangen. Das Eingabeelement 38 kann bspw. als eine drehbare Rolle, wie in Figur 1 und 2 dargestellt ist, oder als ein Gleitschuh ausgeführt sein. Das Eingabeelement 38 kann bspw. von einer Leitkurve bzw. Steuerkurve beaufschlagt werden. Das Eingabeelement 38 kann die empfangene Eingabe an das Übertragungselement 40 übertragen.

Das Übertragungselement 40 kann verschiebbar in dem Klammerträger 18 gelagert sein, vorzugsweise in einer Gleitbuchse. Das Übertragungselement 40 kann länglich, vorzugsweise stangenförmig, sein. Das Übertragungselement 40 kann in Reaktion auf die Eingabe verschoben werden, vorzugsweise parallel zu der Längsachsen L1 und/oder senkrecht zu der Schwenkachse S. Das Übertragungselement 40 kann das Koppelelement 42 tragen, vorzugsweise an einem dem Eingabeelement 38 entgegengesetzten Ende.

Das Koppelelement 42 kann an dem Übertragungselement 40 angebracht sein, vorzugsweise stirnseitig. Beispielsweise kann das Koppelelement 42 mittels einer Schraube an dem Übertragungselement 40 angebracht sein. Die Schraube kann bspw. parallel zu der Längsachse L1 ausgerichtet sein. Wird das Übertragungselement 40 verschoben, kann das Koppelelement 42 mitverschoben werden. Das Koppelelement 42 kann das Übertragungselement 40 mit den Schwenkarmen 44, 46 koppeln.

Der Schwenkarm 44 kann den Klammerarm 24 mit dem Koppelelement 42 verbinden. Der Schwenkarm 44 kann an einem Ende schwenkbar mit dem Koppelelement 42 verbunden sein, z. B. mittels eines Bolzens oder Drehzapfens. Der Schwenkarm 44 kann an einem entgegengesetzten Ende schwenkbar mit dem Klammerarm 24 verbunden sein, z. B. mittels eines Bolzens oder Drehzapfens.

Der Schwenkarm 46 kann den Klammerarm 26 mit dem Koppelelement 42. Der Schwenkarm 46 kann an einem Ende schwenkbar mit dem Koppelelement 42 verbunden sein, z. B. mittels eines Bolzens oder Drehzapfens. Der Schwenkarm 46 kann an einem entgegengesetzten Ende schwenkbar mit dem Klammerarm 26 verbunden sein, z. B. mittels eines Bolzens oder Drehzapfens.

Die Schwenkarme 44, 46 sind bevorzugt V-förmig und/oder übereinander (z. B. bezüglich der Hochachse) angeordnet. Die Schwenkarme 44, 46 sind vorzugsweise koaxial bezüglich des Koppelelements 42 schwenkbar. Es sind allerdings bspw. auch parallele Schwenkachsen für die Schwenkarme 44, 46 bezüglich des Koppelelements 42 möglich. Die Schwenkarme 44, 46 sind bezüglich einer Hochachse der Klammervorrichtung 10 vorzugsweise zwischen dem Koppelelement 42 bzw. dem Übertragungselement 40 und dem Klammerarmpaar 14 angeordnet.

In Reaktion auf eine mechanische Eingabe kann eine Verschiebung des Eingabeelements 48 in Richtung zu dem Behälter 12 eine Verschiebung des Übertragungselements 40 in Richtung zu dem Behälter 12 bewirken. Eine Verschiebung des Übertragungselements 40 in Richtung zu dem Behälter 12 kann eine Verschiebung des Koppelelements 42 in Richtung zu dem Behälter 12 bewirken. Eine Verschiebung des Koppelelements 42 in Richtung zu dem Behälter 12 kann eine Verschiebung der mit dem Koppelelement 42 schwenkbar verbundenen Enden der Schwenkarme 44, 46 in Richtung zu dem Behälter 12 bewirken. Eine Verschiebung der schwenkbar mit dem Koppelelement 42 verbundenen Enden der Schwenkarme 44, 46 kann ein Schwenken der Schwenkarme 44, 46 an diesen Enden, da die Schwenkarme 44, 46 an den Klammerarmen 24, 26 abgestützt sind, bewirken. Das Schwenken der Schwenkarme 44, 46 kann ein Schwenken der Klammerarme 24, 26, vorzugsweise ein Aufschwenken bzw. Öffnen der Klammerarme 24, 26 zum Freigeben des Behälters 12.

Das Klammerarmpaar 14 und/oder 16 kann mit einer Vorspannung hin zum Schließen, vorzugsweise Einschwenken, beaufschlagt sein. Bspw. kann die Klammervorrichtung 10 ein Vorspannelement 58 für das Klammerarmpaar 14 und optional ein weiteres Vorspannelement 60 für das optionale weitere Klammerarmpaar 16 aufweisen. Es ist auch möglich, dass die Klammerarmpaare 14, 16 durch ein gemeinsames Vorspannelement elastisch vorgespannt sind.

Die Vorspannelemente 58, 60 können separat von den Klammerarmpaaren 14, 16 angeordnet und ausgebildet sein, wie in Figur 1 und 2 dargestellt ist. Es ist möglich, dass die Vorspannelemente 58, 60 direkt an den Klammerarmpaaren 14, 16 angeordnet und/oder integral-einstückig mit dem jeweiligen Klammerarmpaar 14 bzw. 16 ausgebildet sind. Bspw. können die Vorspannelemente im Wesentlichen U-förmig sein und/oder das jeweilige Klammerarmpaar 14 bzw. 16 in einer Horizontalebene umgreifen (nicht dargestellt).

Das Vorspannelement 58 und/oder 60 kann auf einer dem Behälter 12 abgewandten Seite des Klammerträgers 18 angeordnet sein. Die Vorspannelemente 58, 60 können übereinander angeordnet sein. Die Vorspannelemente 58, 60 können sich parallel zueinander und/oder parallel zu den Längsachsen L1, L2 erstrecken.

Das Vorspannelement 58 und/oder 60 kann sich an dem Klammerträger 18 abstützen, vorzugsweise an einer dem Behälter 12 abgewandten Seite des Klammerträgers 18. Das Vorspannelement 58 kann sich an dem Übertragungselement 40 abstützen, vorzugsweise an einem das Eingabeelement 38 tragenden Endabschnitt des Übertragungselements 40. Das Vorspannelement 60 kann sich an dem Übertragungselement 50 abstützen, vorzugsweise an einem das Eingabeelement 48 tragenden Endabschnitt des Übertragungselements 50.

Das Übertragungselement 40 kann sich durch das Vorspannelement 58 hindurch erstrecken bzw. das Vorspannelement 58 kann einen Abschnitt des Übertragungselements 40 umgeben. Das Übertragungselement 50 kann sich durch das Vorspannelement 60 hindurch erstrecken bzw. das Vorspannelement 60 kann einen Abschnitt des Übertragungselements 50 umgeben. Beispielsweise ist das Vorspannelemente 58 und/oder 60 als Schraubenfeder ausgeführt.

Beispielsweise kann das Vorspannelement 58 die Betätigungseinrichtung 20 in Richtung weg von dem Behälter 12 zum Schließen des Klammerarmpaares 14 vorspannen. Im Einzelnen kann das Vorspannelement 58 das Übertragungselemente 40 in Richtung weg von dem Behälter 12 vorspannen. Durch die Kopplung mit den Schwenkarmen 44, 46 können die Klammerarme 24, 26 zueinander bewegt, vorzugsweise geschwenkt bzw. eingeschwenkt, werden. Mittels der Vorspannung kann eine Haltekraft auf den Behälter 12 aufgebracht werden, sodass der Behälter 12 kraftschlüssig zwischen den Klammerarmen 24, 26 gehalten werden kann. Mittels der mechanischen Eingabe an dem Eingabeelement 38 kann die durch das Vorspannelement 58 bewirkte Vorspannung zum Öffnen des Klammerarmpaares 14 überwunden werden.

Das Vorspannelement 60 kann die weitere Betätigungseinrichtung 22 in Richtung weg von dem Behälter 12 zum Schließen des weiteren Klammerarmpaares 16 vorspannen. Im Einzelnen kann das Vorspannelement 60 das Übertragungselemente 50 in Richtung weg von dem Behälter 12 vorspannen. Durch die Kopplung mit den Schwenkarmen 54, 56 können die Klammerarme 28, 30 zueinander bewegt, vorzugsweise geschwenkt bzw. eingeschwenkt, werden. Mittels der Vorspannung kann eine Haltekraft auf den Behälter 12 aufgebracht werden, sodass der Behälter 12 kraftschlüssig zwischen den Klammerarmen 28, 30 gehalten werden kann. Mittels der mechanischen Eingabe an dem Eingabeelemente 48 kann die durch das Vorspannelement 60 bewirkte Vorspannung zum Öffnen des weiteren Klammerarmpaares 16 überwunden werden.

Die Klammervorrichtung 10 kann eine Befestigungseinrichtung 62 aufweisen. Die Befestigungseinrichtung 62 ist dazu ausgebildet, die Klammervorrichtung 10 an einem Behälterförderer, z. B. einem Klammerstern, zu befestigen, vorzugsweise mittels einer Schraubverbindung. Die Befestigungseinrichtung 62 kann mindestens ein Positionierelement aufweisen. Das Positionierelement kann die Klammervorrichtung 10 bei der Befestigung an dem Behälterförderer korrekt an dem Behälterförderer positionieren. Das Positionierelement kann bspw. als ein Positionierstift ausgeführt sein. Die Befestigungseinrichtung 62 kann an dem Klammerträger 18 befestigt sein, z. B. an einer Rückseite, Oberseite und/oder Unterseite des Klammerträgers 18.

Es ist möglich, dass die Klammerarme 24 und 26 und ggf. 28 und 30 bspw. in deren Mittelabschnitten bezüglich der Längsachsen L1 bzw. L2 einander zugewandte Anschlagflächen aufweisen. An den Anschlagflächen können die Klammerarme 24 und 26 sowie ggf. 28 und 30 in der Schließstellung aneinander anliegen, wenn sie keinen Behälter 12 halten.

Die Figur 3 zeigt einen Behälterförderer 64, vorzugsweise einen drehbaren Klammerstern. Es ist allerdings bspw. auch möglich, dass der Behälterförderer 64 als ein Linearförderer ausgeführt ist. Der Behälterförderer 64 weist mehrere Klammervorrichtungen 10 auf. Die Klammervorrichtungen 10 sind bevorzugt um einen Umfang des Behälterförderers 64 angeordnet. Der Behälterförderer 64 kann die Behälter 12 bspw. durch einen Abschnitt einer Behälterbehandlungsanlage transportieren, z. B. zum Verbinden von Behälterbehandlungsvorrichtungen der Behälterbehandlungsanlage.

Eine Besonderheit der vorliegenden Offenbarung besteht nun darin, dass die Klammervorrichtung 10 mit einem Anschlagelement (nicht dargestellt in Figuren 1 bis 3) kombiniert werden kann. Das Anschlagelement kann eine Haltekraft der Klammervorrichtung 10 zum Halten eines Behälter 12 verringern. Zur weiteren Erläuterung wird auf die Figuren 4 bis 8 Bezug genommen.

Die Figuren 4 bis 8 zeigen den Behälterförderer 64 (bzw. Ausschnitte davon) mit mehreren Anschlagelementen 66. Vorzugsweise kann jeder Klammereinrichtung 10 eines der mehreren Anschlagelemente 66 zugeordnet sein. Nachfolgend ist zur Verbesserung der Lesbarkeit teilweise nur auf ein Anschlagelement 66 Bezug genommen. Die Ausführungen gelten entsprechend für alle Anschlagelemente 66.

Das Anschlagelement 66 ist in einer Anschlagstellung positioniert. In der Anschlagstellung begrenzt das Anschlagelement 66 eine Schließbewegung des Klammerarmpaares 14 der Klammervorrichtung 10. Damit kann eine Reduzierung der Haltekraft des Klammerarmpaares 14 auf den gehaltenen Behälter 12 erreicht werden. Das Anschlagelement 66 ist an den zu haltenden Behälter 12 derart angepasst, dass es in einer Stellung des Klammerarmpaares 14, in der der Behälter 12 von dem Klammerarmpaar 14 gehalten ist, das Klammerarmpaar 14 (teilweise) abstützt. Die von dem Klammerarmpaar 14 aufgebrachte Haltekraft (z. B. bewirkt durch die Vorspannung des Klammerarmpaares 14) kann auf das Anschlagelement 66 und den Behälter 12 verteilt werden. Dementsprechend wird eine Haltekraft auf den Behälter 12 verringert.

Das Anschlagelement 66 ist separat von dem Klammerarmpaar 14 (und ggf. dem Klammerarmpaar 16) ausgebildet. Das Anschlagelement 66 ist weder integral-einstückig mit dem Klammerarmpaar 14 noch mit dem ggf. vorhandenen Klammerarmpaar 16 verbunden. Bevorzugt ist das Anschlagelement 66 als ein Anschlagbolzen ausgeführt, wie in den Figuren 4 bis 8 dargestellt ist. Alternativ kann das Anschlagelement 66 bspw. als ein Stab, eine Stange, eine Platte, ein Block, ein Keil usw. ausgeführt sein. Prinzipiell kann das Anschlagelement jegliche Form für einen Anschlag aufweisen.

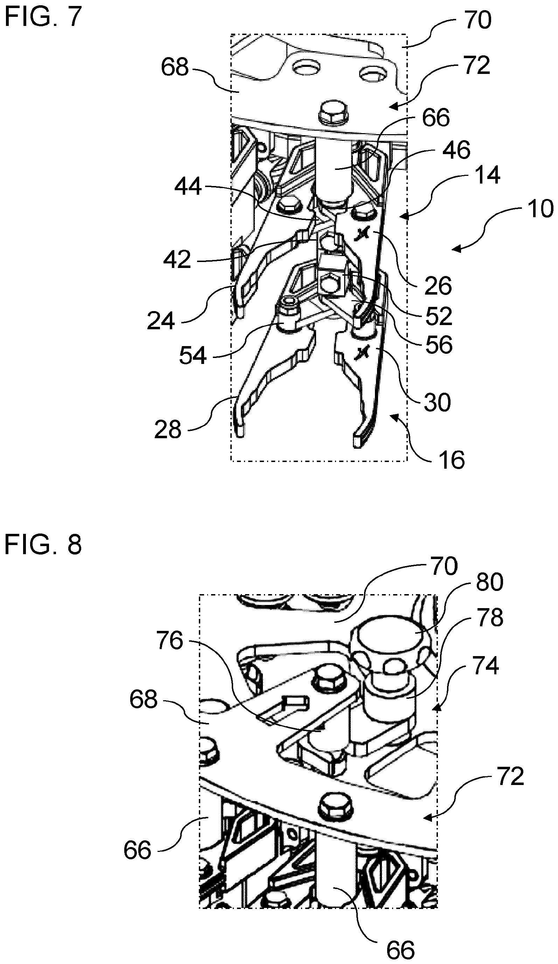

Wie insbesondere aus der Figur 7 hervorgeht, ist das Anschlagelement 66 in der Anschlagstellung bevorzugt zwischen den Klammerarmen 24 und 26 des Klammerarmpaares 14 positioniert sein. Das Anschlagelement 66 kann bspw. direkt oberhalb von dem Koppelelement 42 angeordnet sein. Das Anschlagelement 66 kann vertikal ausgerichtet sein. Im Einzelnen kann der Klammerarm 24 eine Anschlagfläche für das Anschlagelement 66 aufweisen. Die Anschlagfläche kann an einer Innenseite des Klammerarms 24 und/oder in einem Mittelabschnitt des Klammerarms 24 bezüglich der Längsachse L1 (siehe Figur 1) angeordnet sein. Der Klammerarm 26 kann eine Anschlagfläche für das Anschlagelement 66 aufweisen. Die Anschlagfläche kann an einer Innenseite des Klammerarms 26 und/oder in einem Mittelabschnitt des Klammerarms 26 bezüglich der Längsachse L1 (siehe Figur 1) angeordnet sein. Die Anschlagflächen der Klammerarme 24, 26 können einander zugewandt sein. Das Anschlagelement 66 kann zwischen den Anschlagflächen angeordnet sein.

Alternativ kann das Anschlagelement 66 anders angeordnet und/oder konfiguriert sein, um die Schließbewegung des Klammerarmpaares 14 der Klammervorrichtung 10 zu begrenzen. Unter Bezugnahme auf die Figuren 1 und 2 kann das Anschlagelement 66 bspw. auf irgendeine Komponente der Betätigungseinrichtung 20 wirken, um die Schließbewegung des Klammerarmpaares 14 der Klammervorrichtung 10 zu begrenzen. Beispielsweise kann das Anschlagelement 66 in der Anschlagstellung eine Bewegung des Eingabeelements 38, des Übertragungselements 40, des Koppelelements 42, des Schwenkarms 44 und/oder des Schwenkarms 46 begrenzen. Es ist möglich, dass die entsprechende Komponente der Betätigungseinrichtung 20 (also z. B. Eingabeelement 38, Übertragungselement 40, Koppelelement 42, Schwenkarm 44 und/oder Schwenkarm 46) eine Anschlagfläche für das Anschlagelement aufweist. Es ist bspw. auch möglich, dass das Anschlagelement 66 bspw. an einer Innenseite des Klammerarms 24 oder einer Innenseite des Klammerarms 26 befestigt ist, z. B. abnehmbar.

Im in den Figuren 4 bis 8 dargestellten Ausführungsbeispiel begrenzt das Anschlagelement 66 jeweils die Schließbewegung des Klammerarmpaares 14. Sofern das optionale weitere Klammerarmpaar 16 mit dem Klammerarmpaar 14 gekoppelt ist, z. B. über die Betätigungseinrichtungen 20, 22, kann das Anschlagelement 66 auch mittelbar eine Schließbewegung des Klammerarmpaares 16 begrenzen. Wenn andererseits eine Bewegung der Klammerarmpaare 14, 16 unabhängig voneinander erfolgt bzw. die Klammerarmpaare 14, 16 ungekoppelt sind, dann begrenzt das Anschlagelement 66 die Schließbewegung des weiteren Klammerarmpaares 16 nicht. Die Haltekraft des weiteren Klammerarmpaares 16 wird nicht verringert. Es ist möglich, dass zum Verringern der Haltekraft des weiteren Klammerarmpaares 16 bspw. ein weiteres Anschlagelement umfasst ist, das in einer Anschlagstellung eine Schließbewegung des weiteren Klammerarmpaares 16 begrenzt. Es wird nochmals darauf hingewiesen, dass es auch möglich ist, dass die Klammervorrichtung 10 lediglich ein Klammerarmpaar aufweist, z. B. das Klammerarmpaar 14, oder mehr als zwei Klammerarmpaare aufweist.

Die Anschlagelemente 66 sind von einem Trägerkörper 68 getragen. Die Anschlagelemente 66 können kraft-, form- und/oder stoffschlüssig mit dem Trägerkörper 68 verbunden sein. Bevorzugt sind die Anschlagelemente 66 mittels Schraubverbindungen mit dem Trägerkörper 68 verbunden. Beispielweise können die Anschlagelemente 66 jeweils ein Innengewindeloch aufweisen, in das eine sich am Trägerkörper 68 abstützende Schraube eingeschraubt ist. Die Schrauben können sich durch Durchgangslöcher des Trägerkörpers 68 erstrecken. Die Anschlagelemente 66 können jeweils koaxial zum jeweiligen Durchgangsloch und/oder zur jeweiligen Schraube angeordnet sein.

Der Trägerkörper 68 kann bspw. im Wesentlichen ringförmig oder zumindest ringsegmentförmig sein. Bevorzugt sind die Anschlagelemente 66 beabstandet voneinander an dem Trägerkörper 68 getragen. Beispielsweise sind die Anschlagelemente 66 an einer Unterseite des Trägerkörpers 68 getragen.

Der Trägerkörper 68 kann sich mit dem Behälterförderer 64 drehen. Der Trägerkörper 68 kann an einem Gestell oder Maschinenrahmen 70 des Behälterförderers 64 befestigt und abgestützt sein, z. B. auf einer Oberseite des Gestells 70 bzw. des Behälterförderers 64.

Die Anschlagelemente 66 und der Trägerkörper 68 können zusammen ein Rüstteil 72 für den bevorzugt als Klammerstern ausgeführte Behälterförderer 64 bilden. Soll die Haltekraft der Klammervorrichtungen 10 verringert werden, kann das Rüstteil 72 an dem Behälterförderer 64 montiert werden. Soll hingegen die Haltekraft der Klammervorrichtungen 10 nicht verringert werden, kann das Rüstteil 72 nicht montiert sein bzw. von dem Behälterförderer 64 demontiert werden.

Wie insbesondere aus der Figur 8 hervorgeht, kann der Trägerkörper 68 bzw. das Rüstteil 72 mittels eines Schnellwechselsystems 74 an dem Gestell 70 befestigt sein. Das Schnellwechselsystem 74 kann ein werkzeugloses Montieren und Demontieren des Rüstteils 72 bzw. des Trägerkörpers 68 an dem Gestell 70 ermöglichen.

Beispielsweise kann das Schnellwechselsystem 74 mindestens ein Befestigungselement 76 und mindestens ein Befestigungselement 78 aufweisen.

Das Befestigungselement 76 kann mit dem Trägerkörper 68 verbunden sein, z. B. stoffschlüssig, kraftschlüssig und/oder formschlüssig. Bevorzugt ist das Befestigungselement 76 mittels einer Schraubverbindung mit dem Trägerkörper 68 verbunden. Beispielsweise kann das Befestigungselement 76 an einer Unterseite des Trägerkörpers 68 angeordnet sein. Das Befestigungselement 76 kann bspw. als stabförmiger und/oder vertikal ausgerichteter Körper ausgeführt sein, vorzugsweise mit einer Nut oder einem Loch zum Eingreifen für das Befestigungselement 78.

Das Befestigungselement 78 kann bewegbar, vorzugsweise verschwenkbar, mit dem Gestell 70 verbunden sein. Eine Schwenkachse kann bspw. vertikal ausgerichtet sein. Beispielsweise kann das Befestigungselement 78 an einer Oberseite des Gestells 70 angeordnet sein. Das Befestigungselement 78 kann so bewegt werden, dass es mit dem Befestigungselement 76 ineinandergreift, um den Trägerkörper 68 an dem Gestell 70 zu befestigen. Das Befestigungselement 78 kann außer Eingriff von dem Befestigungselement 76 bewegt werden, um ein Abnehmen des Trägerkörpers 68 von dem Gestell 70 zu ermöglichen. Beispielsweise kann das Befestigungselement 78 einen hakenförmigen Abschnitt zum Ergreifen bzw. Ineinandergreifen mit dem Befestigungselement 76 aufweisen. Das Befestigungselement 78 kann einen Griff 80, vorzugsweise einen Drehgriff, aufweisen, mit dem das Befestigungselement 78 manuell bewegbar, vorzugsweise schwenkbar, ist.

Bezüglich des Schnellwechselsystems 74 ist noch darauf hinzuweisen, dass dieses in Figur 3 nicht dargestellt ist. Tatsächlich könnte der Behälterförderer 64 gemäß Figur 3 (demontierter Zustand des Rüstteils 72) dennoch das mindestens eine Befestigungselement 78 des Schnellwechselsystems 74 aufweisen, auch wenn dies nicht explizit in Figur 3 dargestellt ist, um eine schnelle Montage (und Demontage) des Rüstteils 72 zu ermöglichen.

Es ist allerdings auch möglich, dass das Anschlagelement 66 auf andere Art und Weise als mittels des Trägerkörpers 68 befestigt ist. Beispielsweise kann das Anschlagelement 66, z. B. direkt an der Klammervorrichtung 10, wie bspw. an einem der Klammerarme 24, 26 oder am Klammerträger 18, befestigt sein.

Das Anschlagelement 66 kann aus der Anschlagstellung lösbar sein. Die Lösbarkeit kann darin bestehen, dass das Anschlagelement 66 abgenommen bzw. demontiert wird, z. B. mittels Demontieren des Rüstteils 72 vom Gestell 70, wie bereits erläutert wurde.

Andererseits ist es alternativ oder zusätzlich möglich, dass ein manueller oder automatischer Bewegungsmechanismus umfasst ist (nicht dargestellt). Der Bewegungsmechanismus kann das Anschlagelement 66 aus der Anschlagstellung in eine Freigabestellung, in der bspw. keine Begrenzung der Schließbewegung bewirkt wird, bewegen, z. B. mittels einer Hubbewegung nach oben. Bspw. könnte statt des Schnellwechselsystems 74 ein Hubsystem umfasst sein, das ein Anheben und Absenken des Trägerkörpers 68 und damit der Anschlagelemente 66 ermöglicht. Das Hubsystem kann bspw. die Anschlagelemente 66 gemeinsam in die jeweilige Anschlagstellung bewegen (z. B. Absenken), wenn eine Begrenzung der Haltekraft gewünscht ist. Das Hubsystem kann bspw. die Anschlagelemente 66 gemeinsam aus der jeweiligen Anschlagstellung bewegen (z. B. Anheben), wenn keine Begrenzung der Haltekraft mehr gewünscht ist.

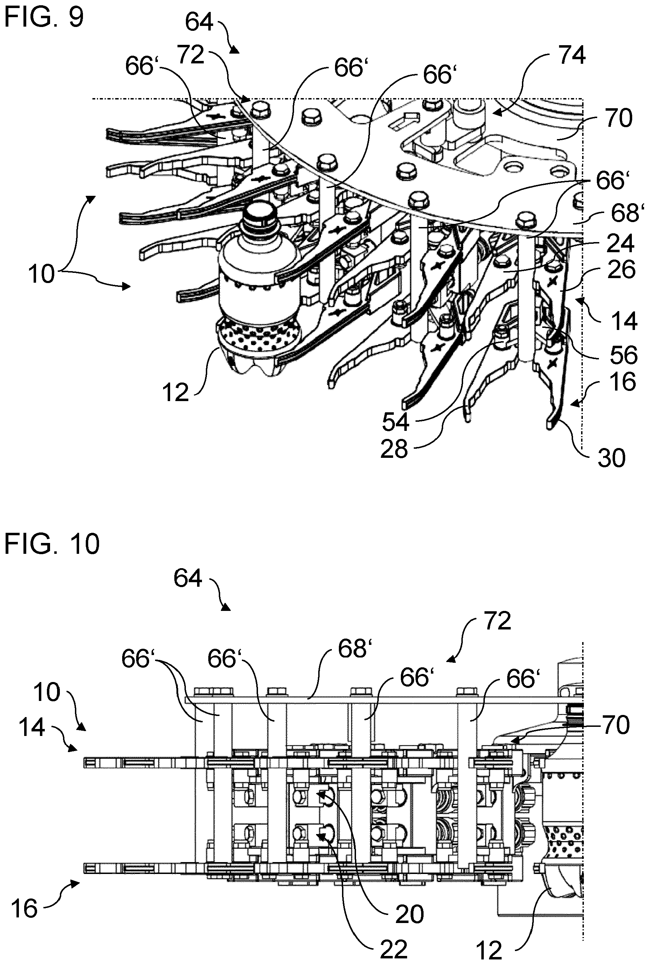

Die Figuren 9 bis 11 zeigen ein weiteres Ausführungsbeispiel, bei dem die Anschlagelementen 66' gegenüber den Anschlagelementen 66 des Ausführungsbeispiels der Figuren 4 bis 8 modifiziert sind.

Die Anschlagelemente 66' können derart ausgebildet und angeordnet sein, dass sie in der Anschlagstellung die Schließbewegungen von beiden Klammerarmpaaren 14,16 direkt begrenzen. Beispielsweise können die Anschlagelemente 66' vertikal ausgerichtet und/oder als Stangen, Stäbe oder Anschlagbolzen ausgeführt sein. In der Anschlagstellung ist das Anschlagelement 66' bevorzugt zwischen den Klammerarmen 24 und 26 des Klammerarmpaares 14 und zwischen den Klammerarmen 28 und 30 des weiteren Klammerarmpaares 16 positioniert. Im Einzelnen können die Klammerarme 24, 26, 28 und 30 jeweils innenseitig und einander zugewandt eine Anschlagfläche für das Anschlagelement 66' aufweisen. Das Anschlagelement 66' kann zwischen den Anschlagflächen angeordnet sein.

Die Anschlagelemente 66' können so angeordnet sein, dass sie die Bewegungseinrichtungen 20, 22 nicht blockieren. Beispielsweise kann das Anschlagelement 66' zwischen den Schwenkarmen 44 und 46 sowie zwischen den Schwenkarme 54 und 56 angeordnet sein (siehe auch Figuren 1 und 2). Im Vergleich zu den Anschlagelementen 66 können die Anschlagelemente 66' bezüglich einer Radialrichtung des Behälterförderers 64 bspw. weiter außen und/oder dichter zu dem Behälter 12 angeordnet sein. Entsprechend kann der Trägerkörper 68' gegenüber dem Trägerkörper 68 des Ausführungsbeispiels der Figuren 4 bis 8 modifiziert sein.

Die hierin bezüglich des Anschlagelements 66(') offenbarten Techniken ermöglichen, dass der Behälterförderer 64 wahlweise in mindestens zwei Konfigurationen betrieben werden kann.

In einer ersten Konfiguration können die mehreren Anschlagelemente 66(') in der Anschlagstellung positioniert sein, um eine Schließbewegung der Klammervorrichtung 10 zum Verringern der Haltekraft zu begrenzen, siehe z. B. Figuren 4 bis 8 oder Figuren 9 bis 11. In der ersten Konfiguration kann der Behälterförderer 64 eine erste Behälterart mit einer verringerten Haltekraft transportieren. Die erste Behälterart kann bspw. Kunststoffbehälter, besonders bevorzugt PET-Flaschen, aufweisen.

In einer zweiten Konfiguration können die Anschlagelemente 66(') außerhalb der Anschlagstellung positioniert sein, sodass die Schließbewegung der Klammervorrichtung 10 durch die Anschlagelemente 66(') nicht begrenzt ist, siehe z. B. Figuren 1 bis 3. Zum Positionieren außerhalb der Anschlagstellung können die Anschlagelemente 66 bspw. demontiert (z. B. zusammen mit dem Trägerkörper 68(')) oder in eine Freigabestellung bewegt werden (z. B. mittels eines Hubsystems). In der zweiten Konfiguration kann der Behälterförderer 64 eine zweite Behälterart ohne verringerte Haltekraft transportieren. Die zweite Behälterart kann bspw. Glasbehälter, besonders bevorzugt Glasflaschen, aufweisen.

Der Behälterförderer 64 kann von der ersten Konfiguration zu der zweiten Konfiguration umgerüstet werden und umgekehrt. Bspw. kann von der ersten zur zweiten Konfiguration durch Demontage des Rüstteils 72 mittels des Schellwechselsystems 74 (oder bspw. durch Anheben der Anschlagelemente mittels des Hubsystems) umgerüstet werden. Von der zweiten zur ersten Konfiguration kann durch Montage des Rüstteils 72 mittels des Schellwechselsystems 74 (oder bspw. durch Absenken der Anschlagelemente mittels des Hubsystems) umgerüstet werden.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen. Insbesondere sind die einzelnen Merkmale der unabhängigen Ansprüche jeweils unabhängig voneinander offenbart. Zusätzlich sind auch die Merkmale der Unteransprüche unabhängig von sämtlichen Merkmalen der unabhängigen Ansprüche offenbart.

**Bezugszeichenliste**

| | | | |
|---|---|---|---|
| 10 | Klammervorrichtung | 50 | Übertragungselement |
| 12 | Behälter | 52 | Koppelelement |
| 12A | erster Außenumfangsabschnitt | 54 | Schwenkarm |
| 12B | zweiter Außenumfangsabschnitt | 56 | Schwenkarm |
| 14 | Klammerarmpaar | 58 | Vorspannelement |
| 16 | weiteres Klammerarmpaar | 60 | Vorspannelement |
| 18 | Klammerträger | 62 | Befestigungseinrichtung |
| 20 | Betätigungseinrichtung | 64 | Behälterförderer |
| 22 | weitere Betätigungseinrichtung | 66 | Anschlagelement |
| 24 | Klammerarm | 68 | Trägerkörper |
| 26 | Klammerarm | 70 | Gestell |
| 28 | Klammerarm | 72 | Rüstteil |
| 30 | Klammerarm | 74 | Schwellwechselsystem |
| 32 | Drehzapfen | 76 | Befestigungselement |
| 34 | Drehzapfen | 78 | Befestigungselement |
| 36 | Verstärkungsrippe | 80 | Griff |
| 38 | Eingabeelement | | |
| 40 | Übertragungselement | H | Hochachse |
| 42 | Koppelelement | S | Schwenkachse |
| 44 | Schwenkarm | L1 | Längsachse |
| 46 | Schwenkarm | L2 Längsachse | |
| 48 | Eingabeelement | | |

## Patentansprüche

1. Klammervorrichtung (10) zum Halten eines Behälters (12) für einen Behälterförderer (64), vorzugsweise für einen Klammerstern, aufweisend:
ein Klammerarmpaar (14) zum Halten des Behälters (12), das relativ zueinander bewegbar ist; und
ein Anschlagelement (66), das separat von dem Klammerarmpaar (14) ausgebildet und in einer Anschlagstellung positionierbar ist, in der das Anschlagelement (66) eine Schließbewegung des Klammerarmpaares (14) begrenzt.

2. Klammervorrichtung (10) nach Anspruch 1, wobei:
das Anschlagelement (66) aus der Anschlagstellung lösbar, vorzugsweise abnehmbar, ist, sodass die Schließbewegung unbeeinflusst von dem Anschlagelement (66) ist; oder
das Anschlagelement (66) aus der Anschlagstellung in eine Freigabestellung, in der die Schließbewegung unbeeinflusst von dem Anschlagelement (66) ist, bewegbar ist.

3. Klammervorrichtung (10) nach Anspruch 1 oder Anspruch 2, wobei:
das Anschlagelement (66) als ein Stab, eine Stange, eine Platte, ein Block, ein Keil oder ein Anschlagbolzen ausgebildet ist; und/oder
das Anschlagelement (66) vertikal ausgerichtet ist; und/oder
das Anschlagelement (66) in der Anschlagstellung eine Verringerung einer Haltekraft des Klammerarmpaares (14) bewirkt.

4. Klammervorrichtung (10) nach einem der vorherigen Ansprüche, wobei:
das Anschlagelement (66) in der Anschlagstellung zwischen dem Klammerarmpaar (14), vorzugsweise zwischen einander gegenüberliegenden Anschlagflächen des Klammerarmpaares (14), positioniert ist; und/oder
die Klammervorrichtung (10) eine Betätigungseinrichtung (20) zum Bewegen des Klammerarmpaares (14) aufweist und das Anschlagelement (66) in der Anschlagstellung in Wirkverbindung mit der Betätigungseinrichtung (20) zum Begrenzen der Schließbewegung des Klammerarmpaares (14) ist.

5. Klammervorrichtung (10) nach einem der vorherigen Ansprüche, ferner aufweisend:
ein weiteres Klammerarmpaar (16) zum Halten des Behälters (12) gemeinsam mit dem Klammerarmpaar (14), wobei das weitere Klammerarmpaar (16) relativ zueinander bewegbar und über oder unter dem Klammerarmpaar (14) angeordnet ist.

6. Klammervorrichtung (10) nach Anspruch 5, wobei:
das Anschlagelement (66) in der Anschlagstellung ebenfalls eine Schließbewegung des weiteren Klammerarmpaares (16) begrenzt; oder
die Klammervorrichtung (10) ein weiteres Anschlagelement aufweist, das in einer Anschlagstellung positionierbar ist, in der das weitere Anschlagelement eine Schließbewegung des weiteren Klammerarmpaares (16) begrenzt; oder
das weitere Klammerarmpaar (16) ohne ein separates, eine Schließbewegung des weiteren Klammerarmpaares begrenzendes Anschlagelement ausgebildet ist.

7. Behälterförderer (64), vorzugsweise Klammerstern, zum Transportieren von Behältern (12), aufweisend:
mehrere Klammervorrichtungen (10) nach einem der vorherigen Ansprüche, die vorzugsweise um einen Umfang des Behälterförderers (64) angeordnet sind.

8. Behälterförderer (64) nach Anspruch 7, ferner aufweisend:
einen, vorzugsweise ringförmigen oder ringsegmentförmigen, Trägerkörper (68), der die Anschlagelemente (66) der mehreren Klammervorrichtungen (10) gemeinsam trägt, vorzugsweise auf einer Oberseite oder einer Unterseite des Trägerkörpers (68),
wobei vorzugsweise der Trägerkörper (68) auf einem Gestell (70) des Behälterförderers (64) lösbar befestigt ist, besonders bevorzugt mittels eines werkzeuglosen Schnellwechselsystems (74).

9. Behälterförderer (64) nach Anspruch 7 oder Anspruch 8, wobei:
der Behälterförderer (64) wahlweise in einer ersten Konfiguration und in einer zweiten Konfiguration zum Transportieren der Behälter (12) betreibbar ist, wobei die Anschlagelemente (66) in der ersten Konfiguration in der Anschlagstellung positioniert sind und in der zweiten Konfiguration außerhalb der Anschlagstellung positioniert und/oder vom Behälterförderer (64) demontiert sind.

10. Rüstteil (72) für einen als Klammerstern ausgeführten Behälterförderer (64), vorzugsweise nach einem der Ansprüche 7 bis 9, aufweisend:
einen ringförmigen oder ringsegmentförmigen Trägerkörper (68); und
mehrere Anschlagelemente (66) für Klammervorrichtungen (10) des Klammersterns zum Begrenzen einer Schließbewegung der Klammervorrichtungen (10), wobei die mehreren Anschlagelemente (66) verteilt um einen Umfang des Trägerkörpers (68) angeordnet sind.

11. Verfahren zum Betreiben eines Behälterförderers (64), vorzugsweise eines Klammersterns und/oder nach einem der Ansprüche 7 bis 9, mit mehreren Klammervorrichtungen (10), wobei das Verfahren aufweist:
Bereitstellen mehrerer Anschlagelemente (66);
wahlweises Betreiben des Behälterförderers (64) in einer ersten Konfiguration und in einer zweiten Konfiguration,
wobei in der ersten Konfiguration die bereitgestellten mehreren Anschlagelemente (66) in einer Anschlagstellung positioniert sind, in der sie eine Schließbewegung einer jeweils zugeordneten Klammervorrichtung (10) der mehreren Klammervorrichtungen (10) begrenzen, und
wobei in der zweiten Konfiguration die bereitgestellten mehreren Anschlagelemente (66) außerhalb von der Anschlagstellung positioniert sind und/oder von dem Behälterförderer (64) demontiert sind.

12. Verfahren nach Anspruch 11, wobei:
der Behälterförderer (64) in der ersten Konfiguration eine erste Behälterart, vorzugsweise Kunststoffbehälter, besonders bevorzugt PET-Flaschen, transportiert; und
der Behälterförderer (64) in der zweiten Konfiguration eine zweite Behälterart, die sich von der ersten Behälterart unterscheidet, vorzugweise Glasbehälter, besonders bevorzugt Glasflaschen, transportiert.

13. Verfahren nach Anspruch 12, wobei:
in der ersten Konfiguration eine Haltekraft der mehreren Klammervorrichtungen (10), mit der die erste Behälterart gehalten wird, mittels der mehreren Anschlagelemente (66) verringert ist im Vergleich zu einer Haltekraft der mehreren Klammervorrichtungen (10), mit der die zweite Behälterart in der zweiten Konfiguration gehalten wird.

14. Verfahren nach einem der Ansprüche 11 bis 13, ferner aufweisend:
Umrüsten des Behälterförderers (64) von der ersten Konfiguration zu der zweiten Konfiguration mittels, vorzugsweise gleichzeitigen und/oder werkzeuglosen, Demontierens der mehrerer Anschlagelemente (66) von dem Behälterförderer (64) und/oder Entfernens der mehreren Anschlagelemente (66) aus der jeweiligen Anschlagstellung; und/oder
Umrüsten des Behälterförderers (64) von der zweiten Konfiguration zu der ersten Konfiguration mittels, vorzugsweise gleichzeitigen und/oder werkzeuglosen, Montierens der mehrerer Anschlagelemente (66) an dem Behälterförderer (64) und/oder Positionierens der mehreren Anschlagelemente (66) in der jeweiligen Anschlagstellung.

15. Verfahren nach einem der Ansprüche 11 bis 14, wobei:
die mehreren Anschlagelemente (66) derart bereitgestellt sind, dass sie an einem gemeinsamen, vorzugsweise ringförmigen, Trägerkörper (68) zum gleichzeitigen, vorzugsweise werkzeuglosen, Montieren an dem Behälterförderer (64) und/oder zum gleichzeitigen, vorzugsweise werkzeuglosen, Demontieren von dem Behälterförderer (64) getragen sind.
